# EUROPEAN PATENT APPLICATION

(11) **EP 4 601 099 A1**
(43) Date of publication of application: **13.08.2025**
(21) Application number: 23880145.0
(22) Date of filing: 16.10.2023
(51) Int. Cl.: H01M 50/342, H01M 50/375, H01M 50/231, H01M 50/367, H01M 50/233, H01M 50/262, H01M 50/24, H01M 50/249, H01M 10/658

(54) **BATTERY MODULE TOP COVER STRUCTURE**

(30) Priority: 17.10.2022 KR 20220133143
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR); PARK, Minsoo, Daejeon 34122 (KR); KIM, Kwangmo, Daejeon 34122 (KR); YUN, Hyun Seop, Daejeon 34122 (KR)
(74) Representative: Plasseraud IP
(86) International application number: PCT/KR2023/015948
(87) International publication number: WO 2024/085568

(57) **Abstract**

The present invention provides a structure of a battery module including: a battery cell laminate; a housing having an open upper end and accommodating the battery cell laminate; and a top cover covering the upper end of the housing, wherein the top cover includes: a first layer 11 having a rigid body; a second layer 12 having a flexible body and laminated on the first layer 11; a ventilation hole 111 perforating the first layer 11 in vertical direction; and a non-circular slit 121 perforating the second layer 12 in the vertical direction, and the first layer 11 and the second layer 12 are fixed to each other along at least a section of edges thereof.

## Description

### [TECHNICAL FIELD]

This application claims the benefit of priority based on Korean Patent Application No. 10-2022-01333143 filed on October 17, 2022, entire content disclosed in the document of the patent applications is included as a part of this specification.

The present invention relates to a battery module having improved gas ventilation function.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium-to-large battery modules.

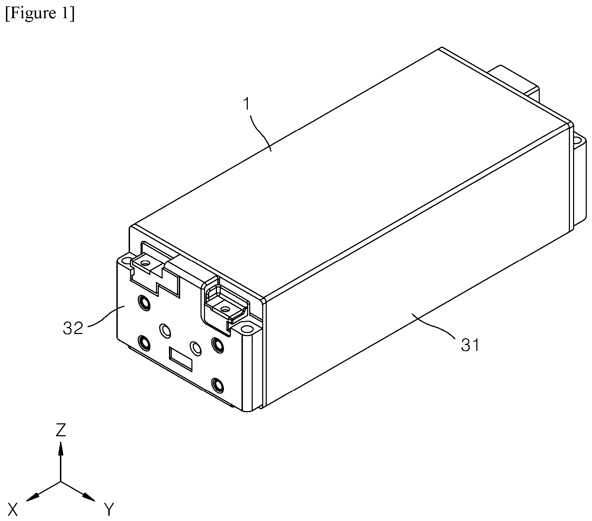

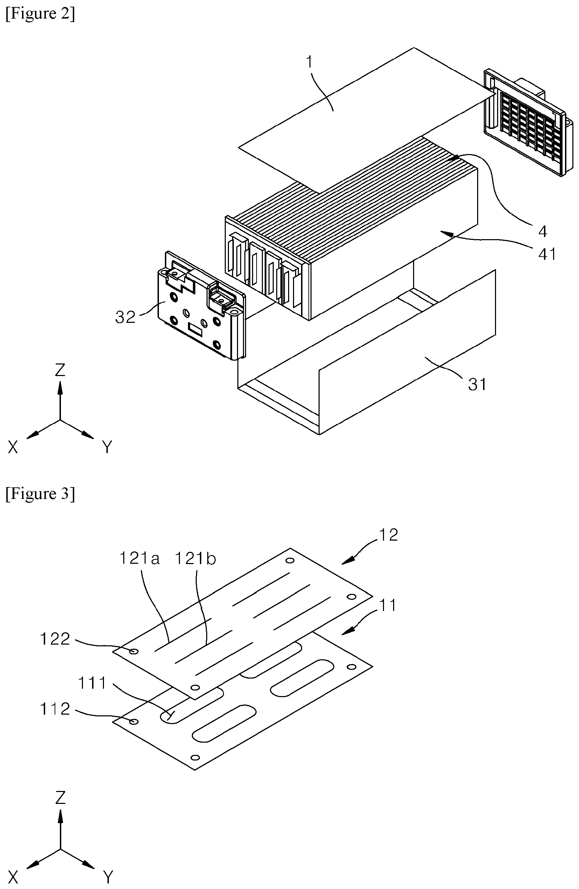

FIGS. 1 and 2 are a perspective view and an exploded perspective view, respectively, illustrating the structure of a general battery module. Referring to FIGS. 1 and 2, a general battery module may include: a battery cell laminate 4 manufactured by stacking a plurality of battery cells 41; a housing 3 having an open upper end and accommodating the battery cell laminate 4l and a top cover 1 covering the upper end of the housing 3. The housing 3 may include: a U frame 31 with open upper end and front and rear ends; and a pair of end plates 32 covering the front and rear ends of the U frame 31, respectively.

Meanwhile, the battery cell 41 has a risk of ignition or thermal runaway due to a short circuit or shock. In the event of thermal runaway, thermal energy and gas are generated from the battery cell 41. The thermal energy and the gas may increase the internal pressure of the housing 3 and cause serial ignition in other neighboring battery cells, resulting in explosion of a battery module M. Therefore, it is necessary to prevent explosion of the battery module and suppress additional ignition of the battery cell 41 by discharging the thermal energy and the gas to the outside of the housing 3.

Furthermore, a plurality of the battery modules may be connected to each other in series or in parallel through terminals exposed through the end plate 32 to constitute a battery pack. The thermal energy and the gas are mainly discharged through the exposed area of the terminal, which may cause serial ignition in other neighboring battery modules, resulting in a larger explosion. Therefore, it is desirable to also prevent heat propagation between the battery modules.

Accordingly, a battery module structure capable of efficiently lowering the internal pressure and the inner temperature of the housing by ventilating the thermal energy and the gas generated due to the thermal runaway, preventing the ventilation from occurring toward other neighboring battery modules, and preventing the thermal energy and the gas generated from other neighboring battery modules from entering the housing is necessary.

### [DISCLOSURE]

### [TECHNICAL PROBLEM]

The present invention was invented in the background of the above-described prior art, and it is an object of the present invention to provide a structure of a battery module capable of efficiently discharging thermal energy and gas to control internal pressure and inner temperature thereof for preventing excessive internal pressure and inner temperature.

It is another object of the present invention to provide a structure of a battery module capable of guiding the ventilation to be not directed toward other neighboring battery modules.

It is yet another object of the present invention to provide a structure of a battery module capable of preventing thermal energy and gas generated from other battery modules from entering the housing, thereby preventing serial ignition.

It is yet another object of the present invention to provide a structure of a battery module that may be manufactured with minimal structural changes such that the conventional battery module production process and production equipment may be utilized to the fullest extent in achieving the above objects.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a battery module including: a battery cell laminate; a housing having an open upper end and accommodating the battery cell laminate; and a top cover covering the upper end of the housing, wherein the top cover includes: a first layer having a rigid body; a second layer having a flexible body and stacked on the first layer; a ventilation hole perforating the first layer in vertical direction; and a non-circular slit perforating the second layer in the vertical direction, and the first layer and the second layer are fixed to each other along at least one section of edges thereof.

The first layer may include a heat-resistant and fire-resistant material.

The second layer may include a heat-resistant and fire-resistant material.

The non-circular slit may include a first type slit provided at a portion of the second layer corresponding to that of the first layer where the ventilation hole is provided. The first type slit, together with the ventilation hole, may function as a valve with an outflow rate of gas higher than an inflow rate of gas.

The non-circular slit may include a second type slit provided at a portion of the second layer corresponding to that of the first layer where the ventilation hole is not provided. The second type slit, together with the ventilation hole, may function as a valve allowing an outflow of gas but not allowing inflow of gas.

The non-circular slit may include a third type slit provided at a portion of the second layer corresponding to that of the first layer extending over where the ventilation hole is provided and where the ventilation hole is not provided. The third type slit may provide an intermediate function between the first type slit and the second type slit.

The second layer may include two or more non-circular slits meet or intersect each other at one point. When two or more of the non-circular slits meet or intersect each other, expansion of the slits may be facilitated.

The top cover may include a fixing member coupling the first layer and the second layer to each other at the section of edges thereof. The fixing member may determine the boundary of the expansion area of the second layer.

The fixing member may include a first fixing member penetrating the first layer and the second layer.

The first fixing member may include bolts and nuts or rivets.

The first fixing member may include a push-in rivet having a head part and a snap part. The snap part of the push-in rivet may be compressed to pass through the first layer and the second layer and then decompressed.

The fixing member may include a second fixing member pressing the second layer toward the first layer.

The second fixing member may include a horizontal part extending in horizontal direction and a vertical part extending in the vertical direction.

The second layer may include an overhang part having one end protruding with respect to one end of the first layer.

The one end of the overhang part may be folded downward and pressed inward by the vertical part in the horizontal direction. **In** such case, the horizontal part presses the upper surface of the second layer toward the first layer, and the vertical part presses the overhang part toward the outer sidewall of the housing, thereby sealing the area inside the edge of the second layer.

The first layer may include: a plate layer bonded to the housing; and an insulation layer including an insulating material.

The insulation layer may be provided between the plate layer and the second layer, or may be stacked on a bottom surface of the plate layer.

A plurality of the battery modules may be interconnected in series and/or parallel to form one battery pack in order to increase the charge and discharge capacity and/or electric power.

The battery pack may further include a ventilation device and a ventilation passage passing therethrough thermal energy and gas discharged from the battery module in upward direction.

The ventilation device may rupture to discharge the thermal energy and the gas to outside of the battery pack when an internal pressure of a battery pack P exceeds a predetermined level.

The battery pack may be built into the vehicle as a power source thereof.

### [ADVANTTAGEOUS EFFECTS]

The present invention provides a structure of a battery module wherein thermal energy and gas may be efficiently discharged through a ventilation hole and slit to prevent excessive internal pressure and inner temperature.

The present invention also provides a structure for a battery module capable of guiding ventilation through a top cover provided at the upper end rather than directed toward other neighboring battery modules.

Another effect of the present invention is that a structure of a battery module may be provided wherein the inflow of thermal energy generated from other battery modules is blocked by having an insulation layer, and the inflow of gas is prevented by a stacked structure, thereby preventing serial ignition of the battery module.

The advantage of the present invention is that a structure of a battery module, which may be manufactured utilizing conventional battery module production process and production equipment by simply replacing the conventional top cover with a top cover having a novel structure, may be provided.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are a perspective view and an exploded perspective view illustrating a structure of a general battery module, respectively.
FIGS. 3 and 4 are an exploded perspective view illustrating a stacked structure of a top cover according to an embodiment of the present invention and an exploded perspective view illustrating the stacked structure of the top cover having slits intersecting each other according to a first modified example of the present invention, respectively.
FIGS. 5 and 6 are schematic diagrams illustrating a gas discharge action and a gas inflow prevention action of a first type slit, respectively, according to an embodiment of the present invention.
FIGS. 7 and 8 are schematic diagrams illustrating a gas discharge action and a gas inflow prevention action of a second type slit, respectively, according to an embodiment of the present invention.
FIGS. 9 and 10 are a perspective view and an exploded perspective view, respectively, illustrating a structure of a battery module according to an embodiment of the present invention, and FIG. 11 is a cross-sectional view along line A of the battery module illustrated in FIG. 9.
FIGS. 12 and 13 are a perspective view and an exploded perspective view, respectively, illustrating a structure of a battery module including an overhang part according to a second modified example of the present invention, and FIG. 14 is a cross-sectional view taken along line A' of the battery module illustrated in FIG. 12.
FIGS. 15 and 16 are exploded perspective views illustrating a stacked structure of a top cover having an insulation layer and a structure of a battery module, respectively, according to a third modified example of the present invention, and FIG. 17 is a cross-sectional view illustrating the battery module illustrated in FIG. 16.
FIGS. 18 and 19 are perspective views illustrating a battery pack including a battery module and a vehicle including the battery pack, respectively, according to an embodiment of the present invention.

### [DESCRIPTION OF REFERENCE NUMERALS]

1: top cover
   11: first layer
      11P: plate layer
      11I: insulation layer
      111: ventilation hole
      112: first fixing hole
   12: second layer
      121: slit
         121a: first type slit
         121b: second type slit
      122: second fixing hole
      123: overhang part
2: fixing member
   21: first fixing member
      211: head part
      22: snap part
   22: second fixing member
      221: horizontal part
      222: vertical part
      223: third fixing hole
3: housing
   31: U frame
   32: end plate
4: battery cell laminate
   41: battery cell
M: battery module
P: battery pack
V: vehicle
X: longitudinal/forward/backward direction
Y: width direction/left and right direction
Z: height direction/up and down direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. **In** describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. **In** the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

FIGS. 1 and 2 are a perspective view and an exploded perspective view illustrating a structure of a general battery module, respectively. Referring to FIGS. 1 and 2, a general battery module may include: a battery cell laminate 4 manufactured by stacking a plurality of battery cells 41; a housing 3 having an open upper end and accommodating the battery cell laminate 4; and a top cover 1 covering the open upper end of the housing 3. The housing 3 may include a U frame 31 with open upper, front and rear ends, and an end plate 32 covering the front and rear ends of the U frame 31.

The battery cell 41 may generate thermal energy and gas when ignites. When the thermal energy and the gas are not discharged to the outside, heat may propagate to other neighboring battery cells, resulting in serial ignition, and the increase in internal pressure and inner temperature of the housing 3 may cause the battery module to explode. Furthermore, there is a high possibility that the thermal energy and the gas are discharged through the terminal exposing portion provided on the end plate 32, and thus there is a risk of heat propagation to other neighboring battery modules, resulting in a serial ignition.

The present invention relates to a battery module having a top cover structure that allows the discharge of the thermal energy and the gas to outside in a specific direction and blocking of the inflow of the thermal energy and the gas from outside.

Specifically, the present invention provides a structure of a battery module including: a battery cell laminate; a housing having an open upper end and accommodating the battery cell laminate; and a top cover covering the upper end of the housing, wherein the top cover includes: a first layer having a rigid body; a second layer having a flexible body and laminated on the first layer; a ventilation hole perforating the first layer in vertical direction; and a non-circular slit perforating the second layer in the vertical direction, and the first layer and the second layer are fixed to each other along at least one section of edges thereof.

The present invention is not necessarily limited to a battery module with built-in battery cells, but may be applied to any product having a housing for accommodating contents with an object of promoting discharge of gas from the inside thereof and of preventing inflow of gas from the outside thereof.

**In** addition, despite the expression herein that the housing has an open upper end and the top cover covers the upper end of the housing, the principle of the present invention, which may be applied to any direction in which the housing is open, will be easily understood from the following description.

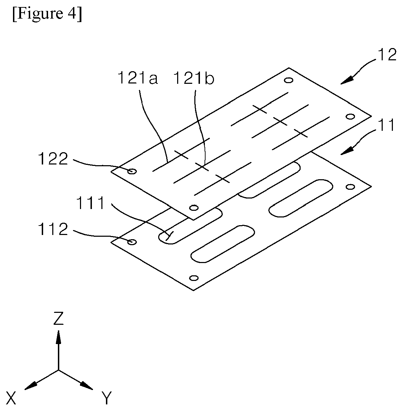

FIGS. 3 and 4 are an exploded perspective view illustrating a stacked structure of a top cover according to an embodiment of the present invention and an exploded perspective view illustrating the stacked structure of the top cover having slits intersecting each other according to a first modified example of the present invention, respectively. Referring to FIGS. 3 and 4, the top cover 1 may include a structure wherein a first layer and a second layer are stacked.

The first layer 11 may have a rigid body. Additionally, the first layer 11 may include a heat-resistant and fire-resistant material. For example, the first layer 11 may be made of a metal material. That is, preferably, the first layer 11 may made of a material with sufficient rigidity not to be deformed despite the thermal energy and the gas discharged from the battery module and the load applied by other members caused by the discharge of the thermal energy and the gas.

A ventilation hole 111 perforating the first layer 11 in vertical direction may be provided at the first layer 11. One or more ventilation holes 111 may be provided. The shape, area and location of the ventilation hole 111 is not limited as long as the portion of the first layer 11 where the ventilation hole 111 is not provided has sufficient rigidity to prevent deformation.

The second layer 12 may have a flexible body. Additionally, the second layer may include a heat-resistant and fire-resistant material. For example, the second layer 12 may be made of a heat-resistant and fire-resistant synthetic resin film material. That is, preferably, the second layer 12 may be made of a material that is not destroyed but undergoes a certain intended deformation caused by the thermal energy and the gas discharged from the battery module.

A non-circular slit 121 perforating the second layer 12 in the vertical direction may be provided at the second layer 12. The shape of the slit 121 may vary as long as it is non-circular. For example, the slit 121 may have a shape of a line segment extending in one direction. One or more slits 121 may be provided.

According to one embodiment of the present invention, the slits 121 may not intersect each other. As the slits 121 do not intersect each other, unnecessary deformation of the slits 121 may be minimized.

Additionally, according to one embodiment of the present invention, the slits 121 may all extend in the same direction. For example, the slits 121 may extend in the lengthwise direction, be spaced apart from each other in the lengthwise direction and widthwise direction, and may be arranged in a grid form.

According to a first modified example, the second layer 12 may include two or more slits 121 that meet or intersect each other. For example, the slits 121 may form a '+' shape by one slit extending in the lengthwise direction intersecting another slit extending in the widthwise direction. In such case, as the slits 121 intersect each other, the portion where the slits 121 are provided may easily become open.

However, the shape, length and location of the slit 121 are not limited as long as the second layer 12 has sufficient rigidity to prevent destruction thereof.

The first layer 11 and the second layer 12 may be fixed to each other along at least one section of edges thereof. The edge refers to a ring-shaped two dimensional virtual plane including the top cover 1 where at least one ventilation hole 111 and at least one slit 121 are provided inside the inner circumference thereof. That is, the first layer 11 and the second layer 12 may be fixed to each other along at least one section of area two dimensionally surrounding one ventilation hole 111 and one slit 121. A plurality of edges may be selected. Preferably, in order to maximize the inner area of the edge, one edge surrounding all the ventilation holes 111 and all the slits 121 may be selected.

Hereinafter, in the description of the gas discharge action and the gas inflow prevention action of the top cover according to an embodiment of the present invention with reference to the drawings, P1 or P1' refers to the internal pressure of the housing, and P2 or P2' refers to the external pressure of the housing., and ΔP or ΔP' refers to the difference between P1 and P2 or the difference between P1' and P2', respectively, that is, the pressure difference between the inside and the outside of the housing.

The slit 121 may include a first type slit 121a provided at a portion of the second layer 12 corresponding to that of the first layer 11 where the ventilation hole 111 is provided.

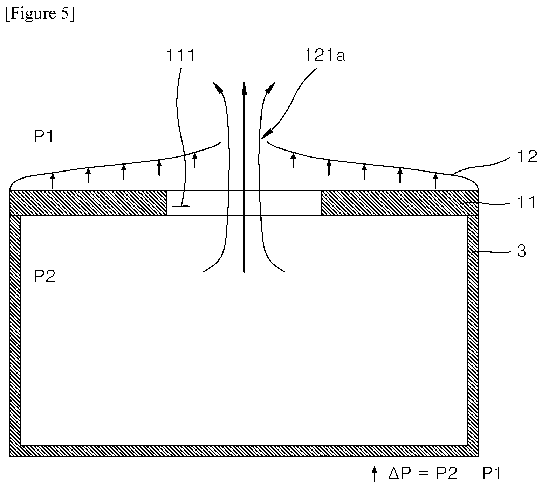

FIG. 5 is a schematic diagram illustrating the gas discharge action of the first type slit according to an embodiment of the present invention. Referring to FIG. 5, when thermal runaway occurs, the internal pressure P2 of the housing 3 may be greater than the external pressure P1 of the housing 3 due to the gas generated within the housing 3. In such case, the bottom surface of the second layer 12 may be subjected to pressure ΔP from the inside of the housing 3. Here, the portion of the bottom surface of the second layer 12 subjected to the pressure ΔP may be the entirety of the bottom surface of the second layer 12 except the section where the second layer 12 is fixed to the first layer 11. Alternatively, the portion of the bottom surface of the second layer 12 subjected to the pressure ΔP may be the entire area surrounded by the edge.

The portion of the second layer 12 subjected to the pressure ΔP may expand in an upward direction due to the pressure ΔP. Since the force applied to the second layer 12 gets greater as the portion of the bottom surface of the second layer 12 subjected to the pressure ΔP gets larger, the second layer 12 may expand more.

As the second layer 12 expands, the first type slit 121a may expand, thereby expanding the passage for discharging the gas. Since the extent to which the first type slit 121a expands has a positive correlation with the extent to which the second layer 12 expands, there may also be a positive correlation with the portion of the second layer 12 subjected to the pressure ΔP. The reason that the first type slit 121a expands is that the circumference of the first type slit 121a may be larger than the maximum circumference of a closed curve having the same area as the open area. Since the minimum circumference among closed curves with the same area, that is, the largest area among closed curves with the same circumference is circular, the first type slit 121a may ideally expand to the maximum until the first type slit 121a becomes circular. Therefore, the principle of solving the problem described above may be applied even when the first type slit 121a is not circular but has the shape of any closed curve.

According to one embodiment of the present invention, when the internal pressure P2 of the housing 3 is greater than the external pressure P1 of the housing 3, a large area of the bottom surface of the second layer 12 may be subjected to the pressure ΔP, and accordingly, the second layer 12 may expand in the upward direction, and as a result, the first type slit 121a may expand and the discharge rate of the gas may increase.

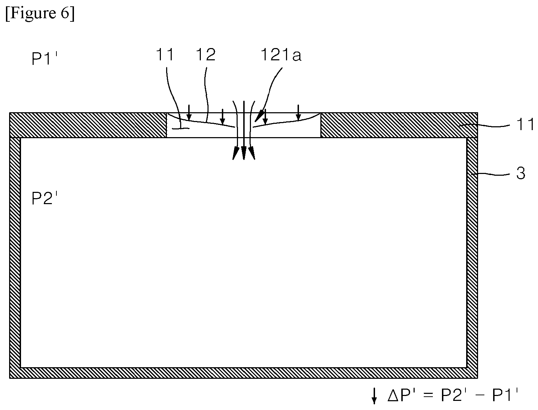

FIG 6 is a schematic diagram illustrating a gas inflow prevention action of the first type slit, according to an embodiment of the present invention. Referring to FIG. 6, when thermal runaway occurs in other battery modules adjacent to the battery module M, the external pressure P1' of the housing 3 is higher than the internal pressure P2' of the housing 3 due to the gas discharged from the other battery modules. In such case, the upper surface of the second layer 12 may be subjected to pressure ΔP' from the outside of the housing 3. Due to the pressure ΔP', a portion of the second layer 12 may expand in the downward direction.

Here, the portion of the upper surface of the second layer 12 that expands in the downward direction under the influence of the pressure ΔP' may be a portion corresponding to that of the first layer 11 where the ventilation hole 111 is provided. This is because the downward displacement of the portion of the second layer 12 corresponding to that of the first layer 11 where the ventilation hole 111 is not provided is limited due to the first layer 11 having a rigid body stacked thereunder. That is, in such case, since the circumference of the ventilation hole 111 acts as an edge, and only the inner portion of the ventilation hole 111 may expand in the downward direction under the influence of the pressure ΔP', the extent to which the second layer 12 expands may be smaller compared to the example of FIG. 5.

As described above, since the extent to which the first type slit 121a expands has a positive correlation with the extent to which the second layer 12 expands, the extent to which the first type slit 121a expands in case of the gas flowing in as shown in FIG. 6 is significantly less compared to the case of the gas discharging as shown in FIG. 5. Therefore the gas inflow passage may also be smaller.

According to one embodiment of the present invention, when the external pressure P1' of the housing 3 is higher than the internal pressure P2' of the housing 3, the narrow area among the upper surface of the second layer 12 corresponding to the ventilation hole 111 may expand in the downward direction under pressure ΔP', and since the area of the second layer 12 expanding as described above is significantly smaller than the area expanding in the second layer 12 when the gas is discharged, the extent to which the first type slit 121a expands may also be significantly smaller than when the gas is discharged. Therefore, gas inflow through the top cover 1 may be significantly difficult compared to the gas discharge through the top cover 1.

Referring back to FIGS. 3 and 4, the slit 121 may include a second type slit 121b provided at a portion of the second layer 12 corresponding to that of the first layer 11 where the ventilation hole 111 is not provided.

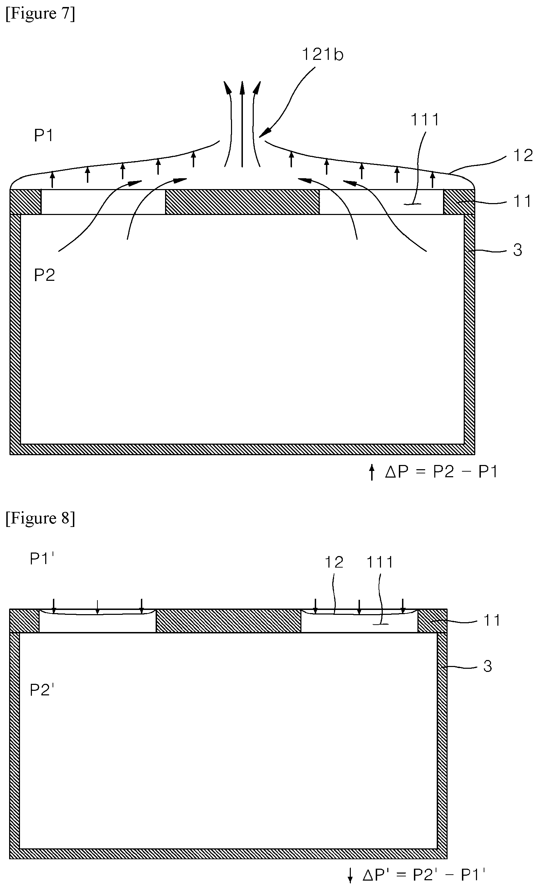

FIG. 7 is a schematic diagram illustrating a gas discharge action of the second type slit according to an embodiment of the present invention. Referring to FIG. 7, since the expansion action of the second type slit 121b when the gas is discharged is similar to that of the first type slit 121a as shown in FIG. 5, the description thereof is omitted.

FIG. 7 is a schematic diagram illustrating a gas inflow prevention effect of the second type slit according to an embodiment of the present invention. Referring to FIG. 8, unlike the first type slit 121a, the second type slit 121b may be attached to the first layer 11 when the pressure ΔP' from the outside is applied in a downward direction. Since the second type slit 121b is not provided at the portion of the second layer 12 corresponding to that of the first layer 11 where the ventilation hole 111 is provided, the inflow of gas itself may be blocked.

That is, according to an embodiment of the present invention, when the external pressure P1' of the housing 3 is higher than the internal pressure P2' of the housing 3, the portion of the second layer 12 corresponding to that of the first layer 11 where the ventilation hole 111 is not provided is pressed and attached to the first layer such that the second type slit 121b is sealed. Since the second type slit 121b is not provided at the portion of the second layer 12 corresponding to that of the first layer 11 where the ventilation hole 111 is provided, the flow of gas into the housing 3 through the second type slit 121b may be blocked. In such case, the ventilation hole 111 and the second type slit 121b together function as a type of one-way valve.

The first type slit 121a is advantageous in that faster gas discharge is possible since the first type slit 121a is provided at a portion of the second layer 12 corresponding to that of the first layer 11 where the ventilation hole 111 is provided, and the second type slit 121b is advantageous in that the second type slit 121b may be sealed to completely block the inflow of gas when the external pressure is higher than the internal pressure since the second type slit 121b provided at a portion of the second layer 12 corresponding to that of the first layer 11 where the ventilation hole 111 is not provided.

The slit 121 may include a third type slit provided at a portion of the second layer 12 corresponding to that of the first layer 11 extending over where the ventilation hole 111 is provided and where the ventilation hole 111 is not provided. It may be easily inferred from the above description that the gas discharge action and gas inflow prevention action of the third type slit are a combination of the actions of the first type slit 121a and the second type slit 121b described above. The second layer 12 according to an embodiment of the present invention preferably include: one of the first type slit 121a, the second type slit 121b and the third type slit; and combinations thereof. For example, when the slit 121 includes only the second type slit 121b, the top cover 1 operates like a complete one-way valve, which causes negative internal pressure of the housing 3 as the inner temperature of the housing 3 decreases after thermal runaway, resulting in applying additional load to the housing 3.

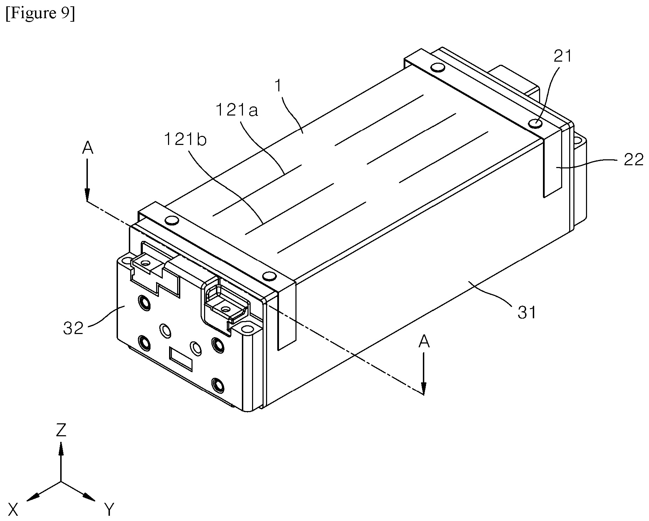

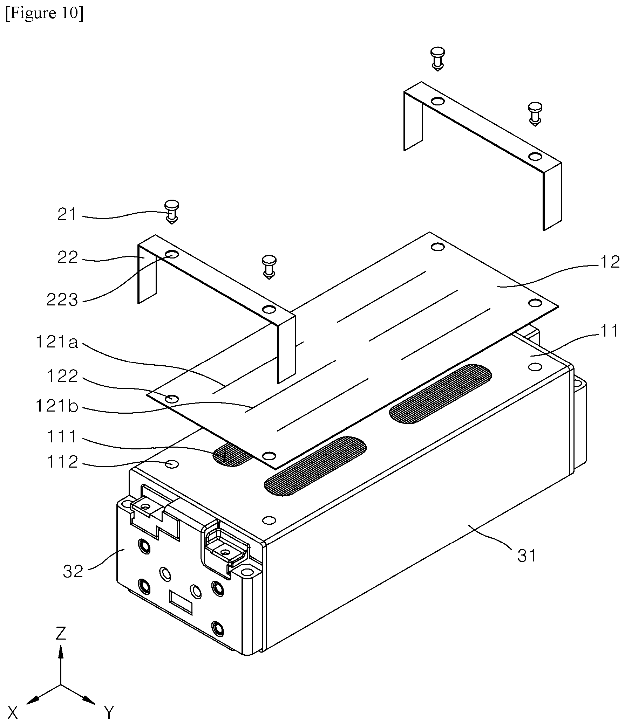

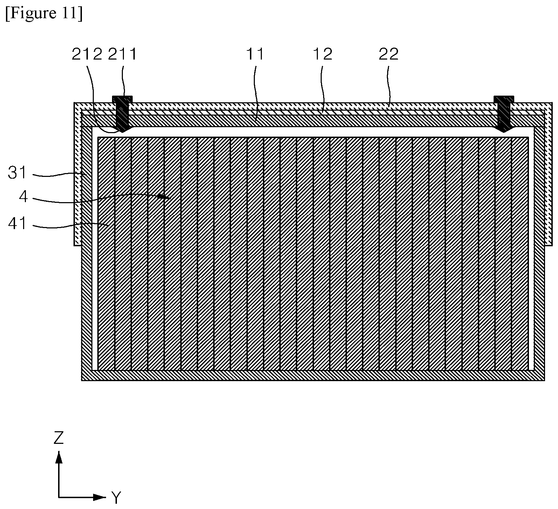

FIGS. 9 and 10 are a perspective view and an exploded perspective view, respectively, illustrating a structure of a battery module according to an embodiment of the present invention, and FIG. 11 is a cross-sectional view along line A of the battery module illustrated in FIG. 9. Referring to FIGS. 9, 10 and 11, the first layer 11 and the second layer 12 may be fixed to each other at the edge by a fixing member 2. The fixing member 2 may include any means capable of fixing the first layer 11 and the second layer 12 to each other.

The fixing member 2 may include a first fixing member 21. One or more first fixing members 21 may be provided.

The first fixing member 21 may simultaneously penetrate the first layer 11 and the second layer 12. Here, the first layer 11 and the second layer 12 may be provided with a first fixing hole 112 and a second fixing hole 122 through which the first fixing member 21 penetrates.

The first fixing member 21 may be provided with a locking portion that limits the downward movement of the first layer 11 and the upward movement of the second layer 12. For example, the first fixing member 21 may include bolts and nuts or rivets.

The first fixing member 21 may include a push-in rivet, and include a head part 211 and a snap part 22. After the first fixing member 21 is compressed by obliquely pressing the snap part 22 from the inner circumference of the first fixing hole 112 and the second fixing hole 122 to pass through the first fixing hole 112 and the second fixing hole 122, the compression is released inside the housing 3, thereby placing the head part 211 on the second layer 12, and the snap part 22 under the first layer 11 to fix the first layer 11 and the second layer 12 to each other.

However, the first fixing member 21 may be any means capable of simultaneously penetrating the first layer 11 and the second layer 12 so as to fix the first layer 11 and the second layer 12 to each other.

The fixing member 2 may include a second fixing member 22. One or more second fixing members 22 may be provided.

The second fixing member 22 may press the second layer 12 toward the first layer 11. The second fixing member 22 may be provided over a longer section at the edge than the first fixing member 21. For example, the second fixing member 22 may be provided extending in the horizontal direction at the edge.

The second fixing member 22 may include a horizontal part 221 extending in the horizontal direction and a vertical part 222 extending in the vertical direction. The vertical part 222 may be provided outer than the first layer 11.

A third fixing hole 223 may be provided in the second fixing member 22. In such case, the first fixing member 21 may sequentially penetrate the second fixing member 22, the second layer 12 and the first layer 11 in order through the third fixing hole 223, the second fixing hole 122, and the first fixing hole 112. When the first fixing member 21 is the push-in rivet, the head part 211 presses the second fixing member 22 in the downward direction, and the snap part 22 presses the bottom surface of the first layer 11 in the upward direction such that the first layer 11 and the second layer 12 may be fixed in close contact with each other through the first fixing member 21 and the second fixing member 22.

Due to the fixing member 2, only the potion of the second layer 12 inner than the edge may expand during thermal runaway. The portion of the edge where the fixing member 2 is not provided may function similarly to the slit 121.

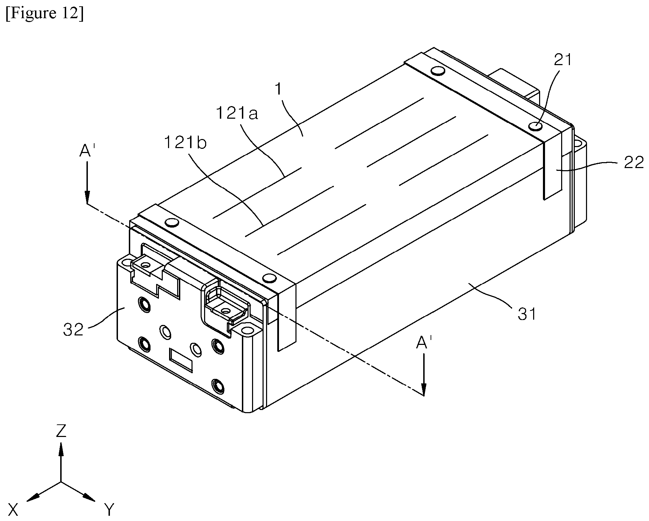

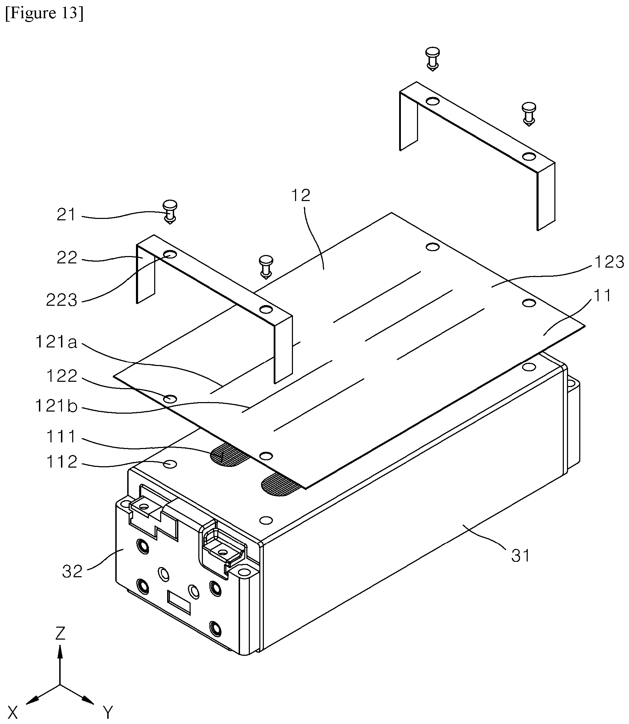

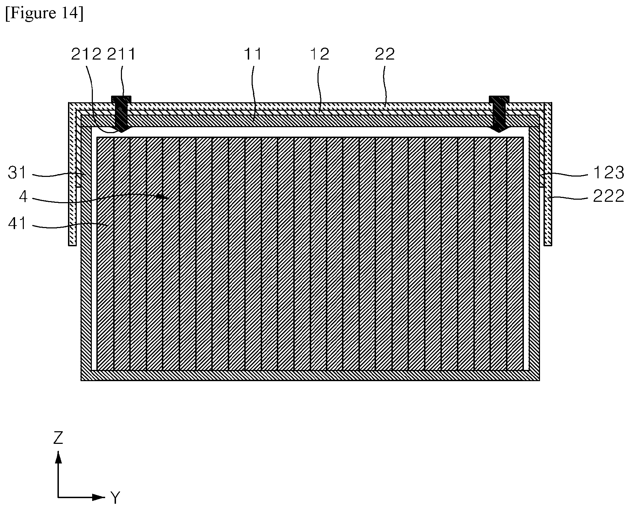

FIGS. 12 and 13 are a perspective view and an exploded perspective view, respectively, illustrating a structure of a battery module including an overhang part according to a second modified example of the present invention, and FIG. 14 is a cross-sectional view taken along line A' of the battery module illustrated in FIG. 12. Referring to FIGS. 12, 13 and 14, the second layer 12 may include an overhang part 123 having one end protruding with respect to one end of the first layer 11.

The one end of the overhang part 123 may be folded to face downward and surround the end of the first layer 11. Here, the one end of the overhang part may be pressed inward by the vertical part 222 in the horizontal direction. When the edge is along the end of the first layer 11, the overhang part 123 may be folded to face downward as described above and then pressed to come into close contact with the outer sidewall of the housing 3, thereby increasing the adhesion of the edge.

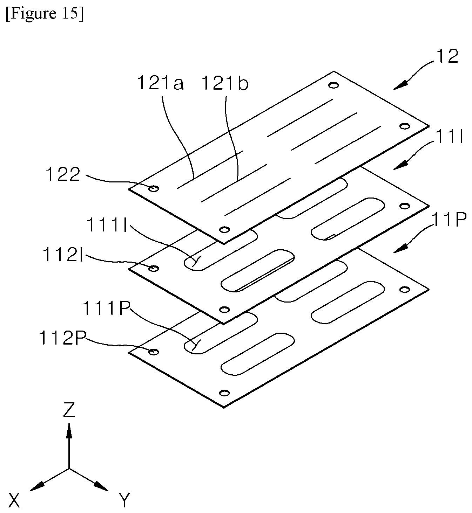

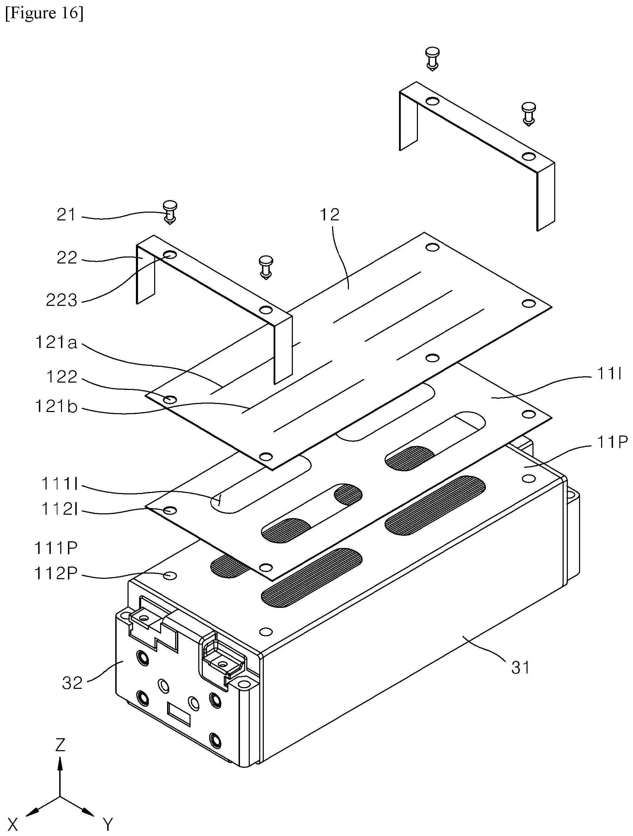

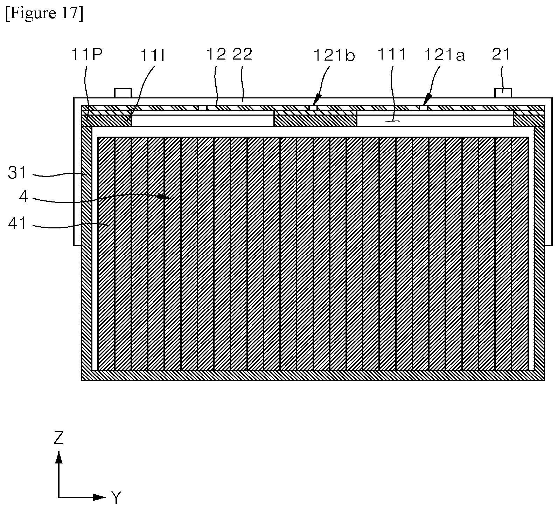

FIGS. 15 and 16 are exploded perspective views illustrating a stacked structure of a top cover having an insulation layer and a structure of a battery module, respectively, according to a third modified example of the present invention, and FIG. 17 is a cross-sectional view illustrating the battery module illustrated in FIG. 16. This is a cross-sectional view. Referring to FIGS. 15, 16 and 17, the first layer 11 may include a plate layer 11P bonded to the housing 3 and an insulation layer 11I including an insulating material.

The plate layer 11P may include metal material.

The plate layer 11P may be bonded to the upper end of the sidewall of the housing 3. The bonding may be done by welding.

The insulation layer 11I may be stacked on the upper surface of the plate layer 11P, that is, interposed between the first layer 11 and the second layer 12, or on the bottom surface of the first layer 11.

By providing the insulation layer 11I, the inflow of thermal energy from the outside of the housing 3 into the inside of the housing 3 may be prevented.

Due to the gas inflow prevention action described above, thermal energy diffusing from the outside into the inside of the housing 3 may be blocked, and also due to the heat insulation action described above, the thermal energy conducted from the outside into the inside of the housing 3 may be blocked. As a result, the battery module M may be prevented from igniting under the influence of thermal runaway of other battery modules.

That is, according to an embodiment of the present invention, due to the multi-layer structure of the first layer 11 and the second layer 12 provided with the ventilation hole 111 and the slit 121, respectively, and fixed to each other at the edge by the fixing member 2, the discharge of gas caused by thermal runaway of the battery module M may be facilitated, and at the same time, the inflow of gas and diffused heat into the battery module M caused by thermal runaway of other battery modules may be prevented. By having the insulation layer 11I, conductive heat caused by thermal runaway of other battery modules may also be prevented from entering into the battery module M.

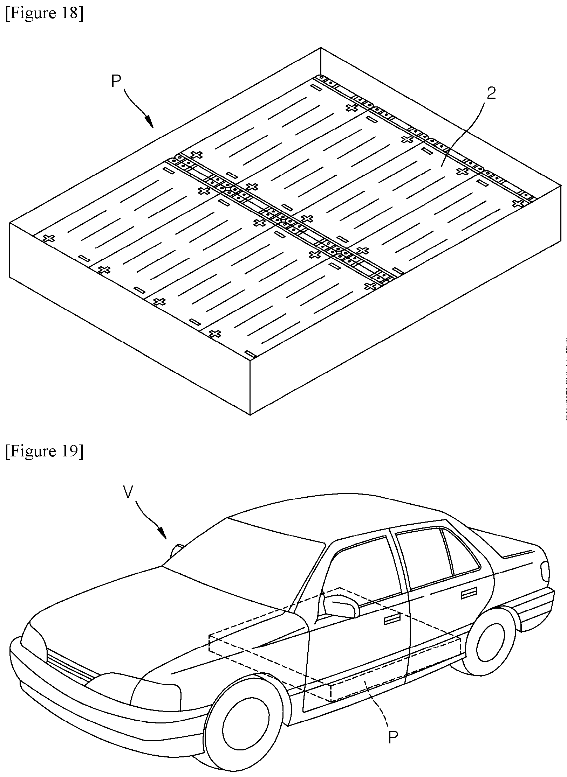

FIGS. 18 and 19 are perspective views illustrating a battery pack including a battery module and a vehicle including the battery pack, respectively, according to an embodiment of the present invention. Referring to FIGS. 18 and 19, a plurality of battery modules M may be connected to each other in series and/or in parallel to form one battery pack P in order to increase the charge and discharge capacity and/or power. Additionally, the battery pack P may be built into the vehicle V as a power source for the vehicle V.

The battery pack P may include a ventilation passage and a ventilation device for discharging thermal energy and gas discharged upward from the battery module M. The ventilation device may enable the discharge of the thermal energy and the gas by rupturing when the internal pressure of the battery pack P exceeds a predetermined level. The effect of reducing or blocking gas inflow of the battery module according to the present invention will be more significant in a situation where the internal pressure of the battery pack P increases before the ventilation device ruptures.

Since the general structure and the manufacturing method of the battery pack P and the vehicle V including those described above are known to those skilled in the art, detailed descriptions thereof will not be given herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell laminate;
a housing having an open upper end and accommodating the battery cell laminate; and
a top cover covering the upper end of the housing,
wherein the top cover comprises:
a first layer having a rigid body;
a second layer having a flexible body and stacked on the first layer;
a ventilation hole perforating the first layer in vertical direction; and
a non-circular slit perforating the second layer in the vertical direction, and
the first layer and the second layer are fixed to each other along at least one section of edges thereof.

2. The battery module of claim 1, wherein the first layer comprises a heat-resistant and fire-resistant material.

3. The battery module of claim 1, wherein the second layer comprises a heat-resistant and fire-resistant material.

4. The battery module of claim **1,** wherein the non-circular slit comprises a first type slit provided at a portion of the second layer corresponding to that of the first layer where the ventilation hole is provided.

5. The battery module of claim **1,** wherein the non-circular slit comprises a second type slit provided at a portion of the second layer corresponding to that of the first layer where the ventilation hole is not provided.

6. The battery module of claim **1,** wherein the non-circular slit comprises a third type slit provided at a portion of the second layer corresponding to that of the first layer extending over where the ventilation hole is provided and where the ventilation hole is not provided.

7. The battery module of claim **1,** wherein the second layer comprises two or more non-circular slits meet or intersect each other at one point.

8. The battery module of claim **1,** wherein the top cover comprises a fixing member coupling the first layer and the second layer to each other at the section of edges thereof.

9. The battery module of claim 8, wherein the fixing member comprises a first fixing member penetrating the first layer and the second layer.

10. The battery module of claim 9, wherein the first fixing member comprises bolts and nuts or rivets.

11. The battery module of claim 10, wherein the first fixing member comprises a push-in rivet having a head part and a snap part.

12. The battery module of claim 8, wherein the fixing member comprises a second fixing member pressing the second layer toward the first layer.

13. The battery module of claim 12, wherein the second fixing member comprises a horizontal part extending in horizontal direction and a vertical part extending in the vertical direction, and
the second layer comprises an overhang part having one end protruding with respect to one end of the first layer, wherein the one end of the overhang part is folded downward and pressed inward by the vertical part in the horizontal direction.

14. The battery module of claim 1, wherein the first layer comprises:
a plate layer bonded to the housing; and
an insulation layer comprising an insulating material.

15. The battery module of claim 14, wherein the insulation layer is provided between the plate layer and the second layer.

16. The battery module of claim 14, wherein the insulation layer is stacked on a bottom surface of the plate layer.

17. A battery pack comprising a battery module of claims 1 to 16.

18. The battery pack of claim 17, further comprising:
a ventilation passage passing therethrough gas and thermal energy discharged from the battery module; and
a ventilation device rupturing to discharge the gas and the thermal energy to outside of the battery pack when an internal pressure of the battery pack exceeds a predetermined level.

19. A vehicle comprising a battery pack of claim 17.
